# EUROPÄISCHE PATENTSCHRIFT

(11) **EP 1 090 731 B1**
(45) Veröffentlichungstag und Bekanntmachung des Hinweises auf die Patenterteilung: **14.04.2004**
(21) Anmeldenummer: 00250297.9
(22) Anmeldetag: 06.09.2000
(51) Int. Cl.: B29C 45/14, B29C 43/18

(54) **Vorrichtung und Verfahren zur Herstellung eines mit einem Dekor versehenen Formteiles und zum Umbugen und Beschneiden des Dekors im Formwerkzeug**
Apparatus and method for manufacturing a moulded part lined with a decoration and for folding over and cutting the decoration in the mould
Dispositif et procédé pour la fabrication d'une pièce moulée pourvue d'une décoration et pour replier et couper la décoration dans le moule

(30) Priorität: 06.10.1999 DE 19948155
(43) Veröffentlichungstag der Anmeldung: 11.04.2001
(73) Patentinhaber: Volkswagen Aktiengesellschaft, 38436 Wolfsburg (DE)
(72) Erfinder: Wiesner, Artur, 38442 Wolfsburg (DE)
(74) Vertreter: Schneider, Henry, Dipl.-Ing.

(56) Entgegenhaltungen:
- DE-A- 3 434 366
- DE-C- 19 607 855
- US-A- 5 928 464
- US-A- 5 938 887

## Beschreibung

Die Erfindung betrifft ein Verfahren zur Herstellung eines mit einem im Wesentlichen einseitigen, flächenhaften Dekor versehenen Formteiles, wobei das Dekor mit dem verflüssigten Material des Formteiles zusammengebracht wird und wobei das Dekor mindestens an einer Stirnfläche des Formteiles anliegt. Weiterhin betrifft die Erfindung eine Vorrichtung zur Durchführung des genannten Verfahrens.

Ein Verfahren der eingangs genannten Art und eine Vorrichtung zur Durchführung dieses Verfahrens sind aus der EP 0 186 016 B1 bekannt. Mit dem dort beschriebenen Verfahren wird ein Schichtkörper bestehend aus einem Formteil aus Kunstharz und einem Oberschichtteil als Dekor hergestellt. Dazu wird zunächst das Dekor in einem Fixierrahmen eingespannt, wobei es sich zwischen einem oberen und einem unteren Stempel befindet. Sodann wird flüssiger Kunstharz zwischen das Dekor und einen der Stempel gefüllt und parallel hierzu werden die Stempel aufeinander zu bewegt, wodurch das Dekor mit dem verflüssigten Kunstharz in Kontakt kommt und in die zu erzielende Form gepresst wird. Durch eine entsprechende Ausbildung der Pressvorrichtung mit mehreren relativ zueinander beweglichen Teilen wird gegen Ende des Pressvorganges der Rand des entstehenden Formteiles umgebogen, wobei das Dekor mit einem Knick von 90° an der Stirnfläche des Kunstharz-Formteiles anliegt. Nachteilig bei diesem Vorgehen ist, dass die Dekorfläche vor Beginn des Verfahrens auf die richtige Breite zugeschnitten sein muss, wobei entsprechende Überstände einzukalkulieren sind. Weiterhin wird mit dem Verfahren nur ein 90°-Umbug des Dekors an der Stirnfläche des Formteiles erzielt, ein weitergehender Umbug muss daher gegebenenfalls durch manuelle Nachbearbeitung erzielt werden.

Auch aus der EP 0 127 035 A2 ist ein Verfahren zur Herstellung eines Formteiles mit einer Dekorbeschichtung bekannt. Hierbei wird das sich bereits in der endgültigen Form befindliche Formteil zunächst einseitig mit dem Dekor bedeckt, wobei die Ränder des Dekors über die Ränder des Formteiles hinausstehen. Sodann wird in zwei Schritten das Dekor zunächst um 90° über die Stirnseiten des Formteiles umgebugt und dann in einer Umbiegung um weitere 90° auch an die Rückseite des Formteiles angelegt. Die zweistufige Ausführung macht das Verfahren und die dafür erforderlichen Vorrichtungen verhältnismäßig aufwendig. Weiterhin setzt das Verfahren ein bestehendes Formteil voraus, auf welches das Dekor durch Kleben oder dergleichen aufgebracht wird. Hierdurch lässt sich jedoch keine optimale Haftung zwischen Dekor und Formteil erzielen.

In der DE 196 34 840 A1 wird ein Verfahren zur Herstellung eines dekorbeschichteten Formteiles beschrieben, bei welchem das ungeformte Trägermaterial zunächst mit dem Dekor beschichtet wird, anschließend Trägermaterial und Dekor gleichzeitig in die zu erzielende Form gepresst werden, und schließlich mit einem Umbugschieber der Rand des Formteiles abgeknickt und abgeschnitten wird, wobei das Dekor über die Stirnseite des Formteiles um 90° umgebugt wird. Auch dieses Verfahren setzt ein Verkleben oder dergleichen zur Verbindung des Dekors mit dem Trägermaterial voraus, was zu den beschriebenen Haftungsproblemen führt. Weiterhin ist mit dem Verfahren lediglich ein 90°-Umbug möglich, das heißt, dass nur die Stirnfläche des Formteiles vom Dekor abgedeckt ist, nicht dagegen die Rückseite.

In der DE 23 53 460 A1 wird ein Verfahren zum Überziehen eines Formteiles mit einem Bezugsstoff beschrieben, bei welchem der Bezugsstoff um 180° um die Stirnseiten gelegt und anschließend auf der Rückseite abgeschnitten wird. Die Verbindung zwischen Formteil und Stoffbezug erfolgt wiederum durch Verkleben oder dergleichen, und über die Art der Erzielung des 180°-Umbugs werden keine Aussagen gemacht.

Aus DE 34 34 366 A1 ist weiterhin ein Formwerkzeug gemäß dem einleitenden Teil des Anspruchs 4 und ein Verfahren gemäß dem einleitenden Teil des Anspruchs 1, zum Herstellen von Formteilen durch Hinterfüllen von Folienschalen mit einer Kunststoff-Formmasse bekannt, bei welchem die Folienschalen entweder bereits formvollendet vorliegen oder die halbharten Folienschalen durch Ansaugen an ein oberseitiges Formwerkzeugteil in Form bringbar sind und die Kunststoff-Formmasse in einen durch das oberseitige und ein in Position gebrachtes unterseitiges Formwerkzeugteil gebildeten Formhohlraum einspritzbar ist. Durch das Verfahren von zwei seitlichen Formwerkzeugen mit Quetschkanten sind abzutrennende Ränder mit einer Soll-Trennlinie versehbar.

Der vorliegenden Erfindung lag die Aufgabe zugrunde, ein einfaches Verfahren zur Herstellung eines mit einem Dekor versehenen Formteiles anzugeben, bei welchem eine gute Haftung zwischen dem Formteil und dem Dekor besteht, das Dekor zumindest die Stirnseiten des Formteiles abdeckt und das Dekor am Rand sauber abgetrennt ist.

Diese Aufgabe wird durch ein Verfahren zur Herstellung eines mit einem im Wesentlichen einseitigen, flächenhaften Dekor versehenen Formteiles gemäß Anspruch 1 gelöst.

Bei dem erfindungsgemäßen Verfahren wird also zunächst das Dekor in die spätere Form gebracht und am Rand - zumindest teilweise - bereits umgebugt. Sodann wird in einem Spritz-Gießverfahren das verflüssigte Material des Formteiles, bei dem es sich zum Beispiel um einen Kunststoff handeln kann, an die freie Seite des Dekors angespritzt beziehungsweise hieran angegossen. Hierdurch entsteht eine besonders feste und innige Verbindung zwischen dem Dekor und dem Trägermaterial, welche insbesondere auch den Randbereich einschließt, an welchem sich das Dekor bereits in der späteren Form befindet. Die ausgezeichnete Haftung zwischen Dekor und Formteil erstreckt sich somit über die gesamte Fläche, welche beim späteren Einsatz des Formteiles einer Belastung unterliegt.

In einer Weiterbildung des Verfahrens kann nach dem Erstarren des Materials des Formteiles überstehendes Material des Dekors abgetrennt werden. Hierdurch kann der Ansatz des Dekors am Formteil durch eine saubere Schnittfläche gebildet werden.

Vorzugsweise wird das Dekor in dem genannten Verfahren um 180° umgebugt. Das heißt, dass es die Stirnseite des Formteiles ganz (bis einschließlich zu der angrenzenden Rückseite des Formteiles) umgibt, so dass der Ansatz des Dekors optisch vollständig verborgen und zudem vor ablösenden Einwirkungen geschützt ist.

Die Erfindung betrifft weiterhin eine Vorrichtung gemäß Anspruch 4 zur Durchführung des oben erläuterten Verfahrens.

Mit der genannten Vorrichtung lässt sich das oben beschriebene erfindungsgemäße Verfahren durchführen, so dass die im Zusammenhang hiermit erläuterten Vorteile erzielt werden können. Das heißt, dass die Spritzmittel so angeordnet sind, dass sie ein auf die Matrize aufgelegtes Dekor von dessen freien Seite her mit verflüssigtem Material des Formteiles anspritzen können und somit eine hervorragende Haftung zwischen Dekor und Formteil entstehen kann. Die Vorrichtung weist dabei noch ein Schneidmesser auf, mit welchem eine saubere Abtrennung des Dekors von dem Trägermaterial des Formteiles möglich ist.

Bei der genannten Vorrichtung kann weiterhin ein Formungskörper in Form einer Patrize vorhanden sein, welcher auf der dekorfreien Seite des herzustellenden Formteiles anliegt beziehungsweise diese formt. Mit dem genannten Formungskörper ist es möglich, dem hergestellten Formteil auch auf seiner dekorfreien Rückseite eine genau definierte Form und/oder Oberflächenstruktur zu verleihen. Die Teilform wird also durch die Matrize und die Patrize vorgegeben.

Die Matrize und der Umbugschieber der erfindungsgemäßen Vorrichtung können vorzugsweise so ausgestaltet sein, dass zwischen ihnen eine Gleitfläche ausgebildet ist, entlang derer die Bewegung des Umbugschiebers in Richtung auf die Stirnfläche des Formteiles zu erfolgt. Hierdurch wird gewährleistet, dass die Matrize und der im Endanschlag der Bewegung befindliche Umbugschieber eine nahtlose Fläche bilden, an welche der Außenfläche des Formteiles beziehungsweise des Dekors anliegen kann. Das Dekor wird somit von Matrize und Umbugschieber gemeinsam gestützt, so dass sich eine glatte und saubere Außenfläche bilden kann.

Weiterhin kann das Schneidmesser eine Anlagefläche aufweisen, welche im zum Formteil vorgeschobenen Zustand des Schneidmessers mit der dekorfreien Seite des Formteiles in Kontakt steht. Hierdurch ist es möglich, dass die Fläche des Umbugschiebers, welcher am Dekor anliegt, quasi nahtlos durch die Anlagefläche des Schneidmessers fortgesetzt wird, so dass sich eine sichere Stütze und Formgebung für das zu bildende Formteil ergibt. Zwischen dem Umbugschieber und dem Schneidmesser wird dabei das überstehende Dekor nach außen vom Formteil weggeführt.

Im Folgenden wird die Erfindung mit Hilfe der Figuren beispielhaft erläutert. Es zeigen:
- Figur 1: einen Querschnitt durch eine Vorrichtung mit 90°-Umbug und
- Figur 2: einen Querschnitt durch eine Vorrichtung mit 180°-Umbug.

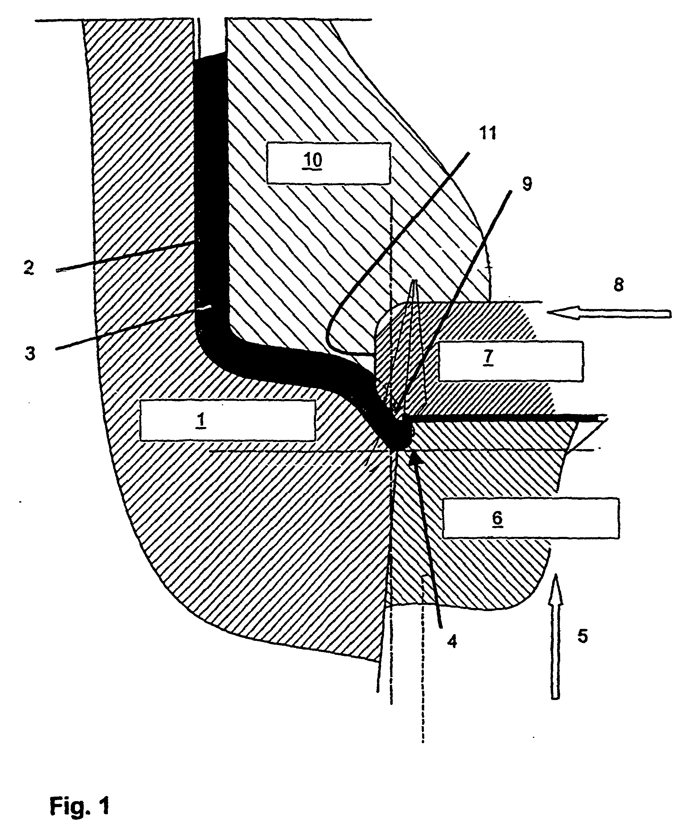

In Figur 1 sind die wesentlichen Elemente der erfindungsgemäßen Vorrichtung in einem Querschnitt durch das zu bildende Formteil 3 dargestellt. Im geschlossenen Zustand der Vorrichtung, das heißt, wenn alle Teile zusammengeführt sind und in Kontakt zueinander stehen, bilden diese Teile funktional die Matrize und die Patrize für das herzustellende Formteil 3. Bei dem Formteil 3 handelt es sich um ein flächenhaftes Gebilde, zum Beispiel ein Karosserieelement für ein Auto, welches in Figur 1 im Querschnitt dargestellt ist.

Die Außenfläche dieses Formteiles wird von der Matrize 1 vorgegeben. An der Stirnseite 4 des Formteiles endet die Matrize 1 mit einer geraden Gleitfläche, entlang welcher sich der bewegliche Umbugschieber 6 auf das Formteil beziehungsweise dessen Stirnfläche 4 zu (Pfeil 5) oder hiervon weg bewegen kann. Der Umbugschieber 6 enthält eine Kehle, welche der Stirnfläche 4 des Formteiles zugewandt ist und diese umschließen kann. Des weiteren besitzt der Umbugschieber 6 eine gerade Außenfläche, welche im Wesentlichen senkrecht vom Formteil weggerichtet ist. Diese Außenfläche steht somit etwa senkrecht zur zuerst beschriebenen Gleit- und Kontaktfläche des Umbugschiebers mit der Matrize 1.

Parallel zur Außenfläche des Umbugschiebers ist die Gleitfläche eines Schneidmessers 7 angeordnet, wobei das Schneidmesser in Richtung des Pfeiles 8 auf das Formteil 3 zu beziehungsweise von diesem weg bewegbar ist. Die Bewegung des Schneidmessers 7 erfolgt parallel zur Außenfläche des Umbugschiebers 6. Das Schneidmesser 7 steht über einen kurzen Abschnitt mit der dekorfreien Rückseite des Formteiles 3 in Kontakt. Am Beginn dieses Abschnittes und gegenüber dem oberen Ende der Kehle des Umbugschiebers 6 befindet sich die Schneide 9 des Schneidmessers.

Die Kontaktfläche zwischen Schneidmesser 7 und Formteil 3 wird von einem Einsatz (Patrize) 10 fortgesetzt, welcher die restliche dekorfreie Rückseite des Formteiles 3 formt und welcher eine Ausnehmung besitzt, die Platz für das Schneidmesser 7 bietet.

In dem in Figur 1 dargestellten geschlossenen Zustand der Vorrichtung wird zwischen den genannten Bauelementen Matrize 1, Umbugschieber 6, Schneidmesser 7 und Einsatz 10 ein Hohlraum ausgebildet, in welchem sich der Formkörper 3 und das Dekor 2 befindet. Das Dekor 2 verläuft dabei an der Oberfläche der Matrize 1 anliegend um die Stirnseite 4 des Formkörpers herum und knickt am Ende der Stirnseite vom Formkörper weg. Der weitere Verlauf des Dekors liegt dann zwischen dem Umbugschieber 6 und dem Schneidmesser 7. Die dekorfreie Rückseite des Formkörpers 3 wird von der Anlagefläche des Schneidmessers 7 und der Oberfläche des Einsatzes 10 gebildet.

Die Herstellung eines dekorbeschichteten Formteiles in einer Vorrichtung gemäß Figur 1 wird im Folgenden beschrieben. Zunächst befindet sich die Vorrichtung in geöffnetem Zustand. Das Schneidmesser 7 ist vorgefahren und der Umbugschieber 6 zurückgefahren. Auf die hierdurch frei zugängliche Oberfläche der Matrize 1 wird das Dekor 2 aufgebracht. Das Aufbringen kann dabei durch bekannte Verfahren wie zum Beispiel das Anlegen eines Vakuums zwischen Matrize 1 und Dekor 2 oder das Festhalten mit Nadeln vorgenommen werden.

Im nächsten Schritt erfolgt das Zusammenfahren der Form. Dabei wird der bewegliche Umbugschieber 6 in Richtung des Pfeiles 5 nach oben bewegt, wobei die Kehle des Umbugschiebers 6 das Dekor 2 erfasst und um 90° umbugt. In der Endstellung des Umbugschiebers 6 liegt die Kehle an der Stirnseite 4 des (noch zu bildenden) Formkörpers 3 an.

Im nächsten Schritt wird das verflüssigte Trägermaterial an die freie Seite des Dekors 2 angespritzt beziehungsweise gegossen. Das Trägermaterial füllt dabei insbesondere auch den Stirnbereich 4 mit dem umgebugten Dekor 2 aus. Durch den Kontakt des Dekors mit der Schmelze findet eine innige Verbindung statt, die später zu ausgezeichneten Haftungseigenschaften des Dekors am Untergrund führt.

Durch die Patrize 10 und das Schneidmesser wird die Formgebung der dekorfreien Rückseite des Formteiles 3 abgeschlossen.

Nachdem die Masse des so gebildeten Formteiles abgekühlt ist, wird das Schneidmesser 7 entgegen der Richtung des Pfeiles 8 zurückgezogen, wobei durch die Schneide 9, die mit der gegenüberliegenden Kante der Kehle des Umbugschiebers 6 zusammenwirkt, das Dekor 2 sauber am Ansatzpunkt zum Formteil 3 abgeschnitten wird. Hierdurch erfolgt der Endbeschnitt und die Abtrennung des überstehenden Restdekors. Abschließend wird das Werkzeug geöffnet und das fertig beschichtete Formteil entnommen.

Die Vorteile des erfindungsgemäßen Verfahrens und der Vorrichtung liegen darin, dass ein sauberer Beschnitt durch Matrize und Patrize erzielt werden kann, wobei das Schneidspiel einstellbar ist. Weiterhin wird eine ausgezeichnete Haftung des Dekors am Spritzling erzielt. Hinsichtlich der Vorrichtung ist darauf hinzuweisen, dass die Schneidensätze auswechselbar sind und daher immer in einem scharfen Zustand sein können, so dass sich saubere Trennschnitte ergeben.

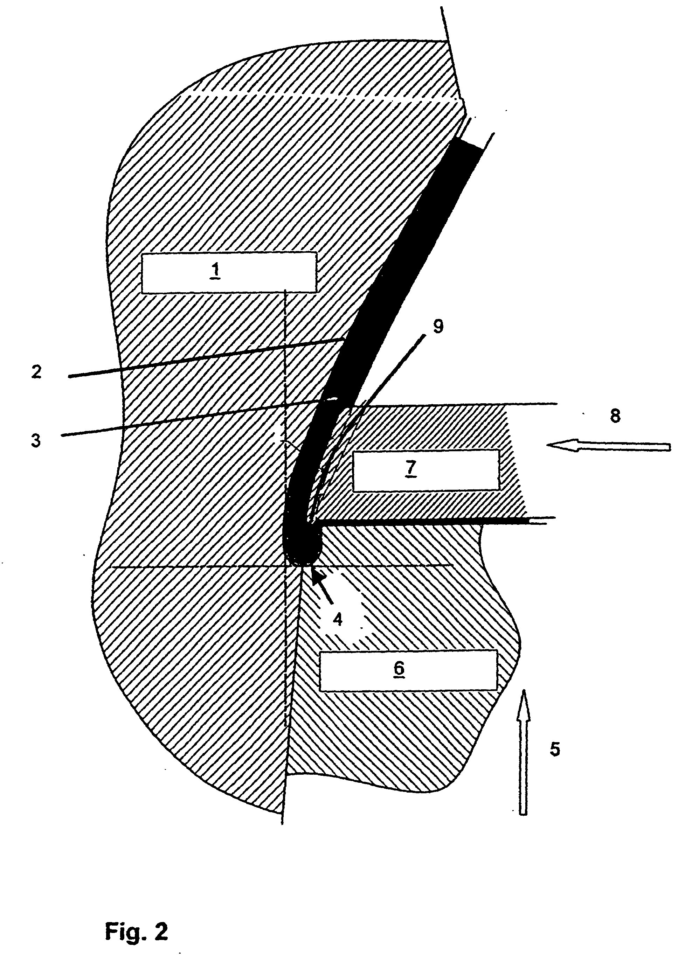

Eine abgeänderte Ausgestaltung der Vorrichtung ist in Figur 2 dargestellt. Diese Vorrichtung entspricht im Wesentlichen derjenigen aus Figur 1, so dass im Folgenden nur die Unterschiede erläutert werden sollen.

Der wichtigste Unterschied besteht darin, dass mit der Vorrichtung nach Figur 2 ein 180°-Umbug erzielt werden kann. Das heißt, dass das Dekor 2 an der Stirnseite 4 des Formkörpers 3 vollständig umläuft, also sowohl die Stirnfläche selbst als auch die daran angrenzende Vorder- und Rückseite des Formteiles 3 bedeckt. Ein derartiger 180°-Umbug wird durch eine entsprechende Formgebung von Matrize 1 und Umbugschieber 6 erzielt. Die in Kontakt zum Formteil 3 beziehungsweise Dekor 2 stehende Oberfläche der Matrize 1 erstreckt sich etwa bis zur Mitte der Stirnfläche 4 des Formteiles. Jenseits der Mitte der Stirnfläche wird der Kontakt zum Formteil 3 beziehungsweise Dekor 2 von der Kehle des Umbugschiebers 6 fortgesetzt, welcher das Dekor 2 um weitere 90° umbugt, so dass insgesamt ein 180°-Umbug des Dekors 2 entsteht.

Neben den bereits im Zusammenhang mit Figur 1 erwähnten Vorteilen der Vorrichtung und des Verfahrens besitzt der 180°-Umbug speziell den zusätzlichen Vorteil, dass die Stirnfläche 4 des Formteiles komplett vom Dekor umschlossen ist. Der Ansatz des Dekors ist somit zum einen optisch verborgen, und zum anderen vor Beanspruchungen geschützt, die zum Ablösen des Dekors vom Untergrund führen könnten.

### BEZUGSZEICHENLISTE

- 1: Matrize
- 2: Dekor
- 3: Formteil
- 4: Stirnfläche
- 5: Richtung
- 6: Umbugschieber
- 7: Schneidmesser
- 8: Richtung
- 9: Schneidkante
- 10: Patrize
- 11: Anlagefläche

## Patentansprüche

1. Verfahren zur Herstellung eines mit einem einseitigen flächenhaften Dekor versehenen Formteiles, wobei
a) das Dekor mit dem verflüssigten Material des Formteiles zusammengebracht wird,
b) das Dekor mindestens an einer Stirnfläche des Formteiles anliegt und das verflüssigte Material des Formteiles an die freie Seite des Dekors (2) angespritzt oder angegossen wird,
c) das Dekor (2) in die zu erzielende Flächenform gebracht wird,
d) der Rand des Dekors (2) im Bereich der Stirnfläche (4) des Formteiles (3) umgebugt wird und
**dadurch gekennzeichnet, dass**
e) ein zwischen einem Schneidmesser (7) und einem Umbugschieber (6) befindliches Dekor (2) bei einer Rückbewegung des Schneidmessers (7) abgetrennt wird.

2. Verfahren nach Anspruch 1, wobei nach Erstarren des Materials des Formteiles (3) überstehendes Material des Dekors (2) abgetrennt wird.

3. Verfahren nach einem der Ansprüche 1 oder 2, wobei das Dekor (2) um 180° umgebugt wird.

4. Vorrichtung zur Durchführung eines Verfahrens nach einem der Ansprüche 1 bis 3, enthaltend eine Matrize (1) zur Aufnahme eines Dekors (2) und Spritzmittel für die Zufuhr des verflüssigten Materials des Formteiles, **gekennzeichnet durch**
a) einen Umbugschieber (6), welcher in Richtung (5) auf die Stirnfläche (4) des Formteiles (3) beweglich angeordnet ist, um das Dekor (2) umzubugen, und
b) ein Schneidmesser (7), welches in Richtung (8) auf das Formteil (3) zu beweglich angeordnet ist und dessen Schneidkante (9) bei einer Rückbewegung des Schneidmessers ein zwischen dem Schneidmesser und dem Umbugschieber (6) befindliches Dekor (2) abtrennen kann.

5. Vorrichtung nach Anspruch 4, wobei auf der dekorfreien Seite des Formteiles (3) ein Formungseinsatz (10) angeordnet ist.

6. Vorrichtung nach einem der Ansprüche 4 oder 5, wobei zwischen der Matrize (1) und dem Umbugschieber (6) eine Gleitfläche ausgebildet ist, entlang derer die Bewegung des Umbugschiebers in Richtung (5) auf die Stirnfläche (4) des Formteiles (3) zu erfolgt.

7. Vorrichtung nach einem der Ansprüche 4 bis 6, wobei das Schneidmesser (7) eine Anlagefläche (11) aufweist, welche im vorgeschobenen Zustand des Schneidmessers mit der dekorfreien Seite des Formteiles (3) in Kontakt steht.

## Claims

1. Method for manufacturing a formed part provided with a flat decoration on one side, wherein
a) the decoration is brought into contact with the liquefied material of the formed part,
b) the decoration is in contact with at least one end face of the formed part, and the liquefied material of the formed part is injected or moulded onto the free side of the decoration (2),
c) the decoration (2) is brought into the flat form to be achieved,
d) the edge of the decoration (2) in the region of the end face (4) of the formed part (3) is folded, and
**characterised in that**
e) a decoration (2) located between a cutting blade (7) and a folding bar (6) is cut-off during a backward movement of the cutting blade (7).

2. Method according to claim 1, wherein, after the solidification of the material of the formed part (3), surplus material of the decoration (2) is cut-off.

3. Method according to any one of claims 1 or 2, wherein the decoration (2) is folded through 180°.

4. Device for the implementation of a method according to any one of claims 1 to 3, which contains a female mould (1) for retaining a decoration (2) and injection means for supplying the liquefied material of the formed part, **characterised by**
a) a folding bar (6), which is arranged to be mobile in a direction (5) towards the end face (4) of the formed part (3) in order to fold the decoration (2), and
b) a cutting blade (7), which is arranged to be mobile in a direction (8) towards the formed part (3), wherein the cutting edge (9) of the cutting blade can cut off a decoration (2) disposed between the cutting blade and the folding bar (6) during a backwards movement of the cutting blade.

5. Device according to claim 4, wherein a forming insert (10) is arranged on the decoration-free side of the formed part (3).

6. Device according to any one of claims 4 or 5, wherein a sliding surface is formed between the female mould (1) and the folding bar (6), along which sliding surface the folding bar moves in the direction (5) towards the end face (4) of the formed part (3).

7. Device according to any one of claims 4 to 6, wherein the cutting blade (7) provides a contact surface (11) which, in the pushed-forward condition of the cutting blade, is in contact with the decoration-free side of the formed part (3).

## Revendications

1. Procédé de fabrication d'une pièce moulée pourvue d'une décoration adhérant à la surface sur un seul côté, dans lequel
a) la décoration est mise en contact avec la matière fluidifiée de la pièce moulée ;
b) la décoration est appliquée contre au moins une surface extérieure de la pièce moulée, et la matière fluidifiée de la pièce moulée est projetée ou coulée sur le côté libre de la décoration (2) ;
c) la décoration (2) est amenée à prendre la forme de la surface à obtenir ;
d) le bord de la décoration (2) est replié dans la zone de la surface extérieure (4) de la pièce moulée (3) ; et
**caractérisé en ce que**
e) une décoration (2), qui se trouve entre une lame de coupe (7) et une empreinte mobile de repliage (6), est sectionnée lors d'un mouvement en arrière de la lame de coupe (7).

2. Procédé selon la revendication 1, dans lequel, après la solidification de la matière de la pièce moulée (3), la matière débordante de la décoration (2) est sectionnée.

3. Procédé selon la revendication 1 ou 2, dans lequel la décoration (2) est repliée à 180°.

4. Dispositif pour la mise en oeuvre d'un procédé selon l'une des revendications 1 à 3, comprenant une matrice (1) destinée à recevoir une décoration (2) et des moyens de projection pour l'amenée de la matière fluidifiée de la pièce moulée, **caractérisé par**
a) une empreinte mobile de repliage (6), qui est disposée de manière à pouvoir se déplacer en direction (5) de la surface extérieure (4) de la pièce moulée (3), afin de replier la décoration (2) ; et
b) une lame de coupe (7), qui est disposée de manière à pouvoir se déplacer en direction (8) de la pièce moulée (3), et dont l'arête coupante (9) peut, lors d'un mouvement en arrière de la lame de coupe, sectionner une décoration (2), qui se trouve entre la lame de coupe et l'empreinte mobile de repliage (6).

5. Dispositif selon la revendication 4, dans lequel un insert de formage (10) est disposé sur le côté exempt de décoration de la pièce moulée (3).

6. Dispositif selon la revendication 4 ou 5, dans lequel une surface de glissement est réalisée entre la matrice (1) et l'empreinte mobile de repliage (6), et le long de laquelle s'effectue le mouvement de l'empreinte mobile de repliage en direction (5) de la surface extérieure (4) de la pièce moulée (3).

7. Dispositif selon l'une des revendications 4 à 6, dans lequel la lame de coupe (7) présente une surface d'appui (11), qui est en contact avec le côté exempt de décoration de la pièce moulée (3), dans l'état avancé de la lame de coupe.
